# EUROPEAN PATENT SPECIFICATION

(11) **EP 1 135 202 B1**
(45) Date of publication and mention of the grant of the patent: **09.07.2003**
(21) Application number: 99959516.8
(22) Date of filing: 03.12.1999
(51) Int. Cl.: B01D 46/42, B01D 35/14

(54) **COMPRESSOR OR VACUUM PUMP EMPLOYING FLUID FILTERS HAVING A CONCEALED MACHINE-READABLE IDENTIFICATION**
VERDICHTER ODER VAKUUMPUMPE, DIE EINEN FLUIDFILTER MIT VERBORGENER MASCHINENLESBARER IDENTIFIZIERUNG ANWENDET
COMPRESSEUR OU POMPE A VIDE EMPLOYANT DES FILTRES POUR FLUIDES A IDENTIFICATION CACHEE LISIBLE PAR MACHINE

(30) Priority: 03.12.1998 GB 9826671
(43) Date of publication of application: 26.09.2001
(73) Proprietor: PSI Global Ltd, Bowburn, Durham DH6 5AD (GB)
(72) Inventor: HUNTER, Susanne, Phyllis, Bowburn, Durham DH6 5AD (GB)
(74) Representative: Lucas, Brian Ronald
(86) International application number: GB9904017
(87) International publication number: WO00032298

(56) References cited:
- EP-A- 0 720 863
- WO-A-98/41306
- DE-A- 19 601 651
- US-A- 3 841 484

## Description

The present invention concerns compressor or vacuum pump employing a replaceable filter element or cartridge, in particular, though not exclusively, for the filtration and purification of air.

The invention provides a compressor or vacuum pump as defined in claim 1 of the accompanying claims.

The means for providing concealed tamper-proof machine-readable identification may be provided by an active device having its own power source. However, it is preferred that it should be provided by a passive or un-powered device such as a resonator, memory device or transsponder that can be interrogated by signals from a reader which may be directly connected thereto or may be magnetically or electrostatically coupled thereto.

Embodiments of the invention will now be described, by way of example only, with reference to the accompanying drawings, in which:
Fig. 1 is a diagram of a compressor,
Fig. 2 is a diagram of an air separation and sump unit forming part of the compressor;
Fig. 3 is a graph showing for a coalescing filter forming part of the compressor of Fig.1 pressure drop as a function of time;
Fig. 4 is a diagrammatic view of an in-line coalescing filter unit;
Fig. 5 is a diagram of a vacuum pump;
Fig. 6 is a detail of a filter showing an end cap;
Fig. 7 is a detail in vertical section of the filter to one side of the end cap showing adjacent portions of the filter housing;
Fig. 8 shows another form of end cap provided in a filter according to the invention; and
Fig. 9 shows part of a filter cartridge diagrammatically in section during the course of manufacture.

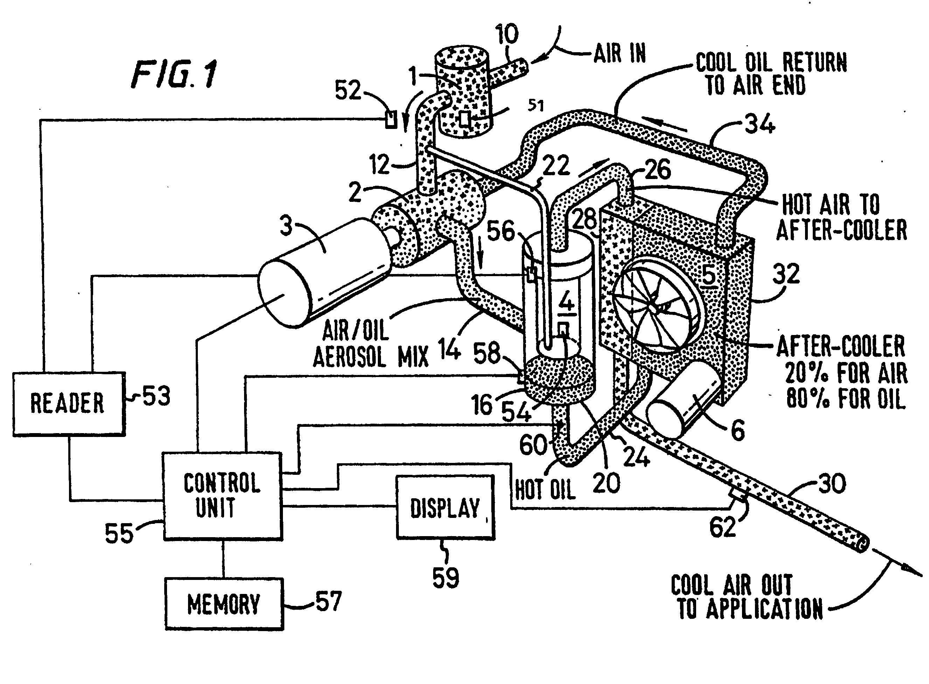

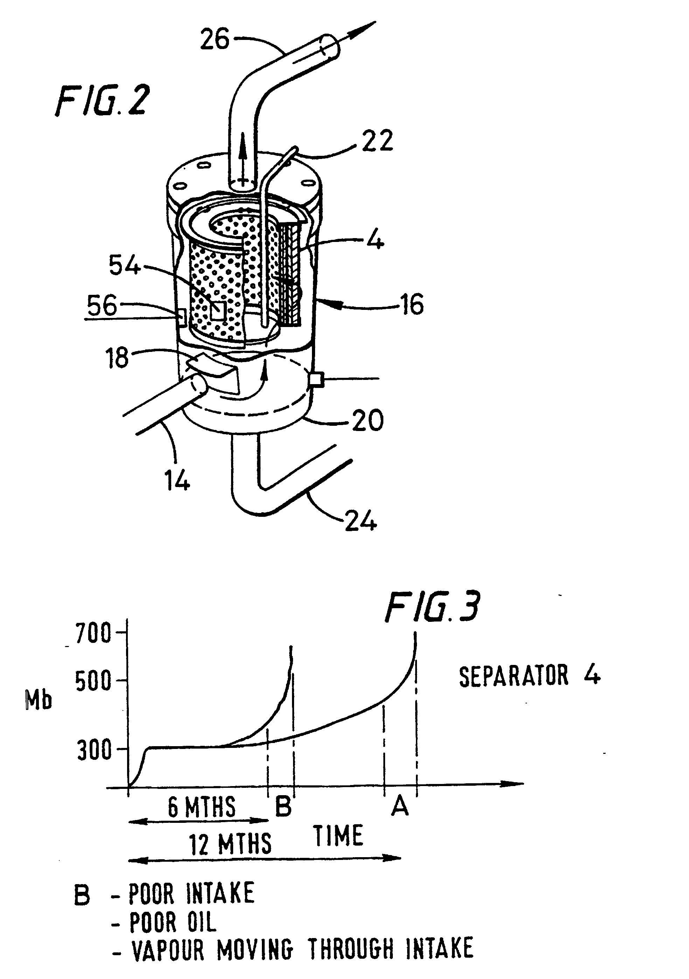

Compressors powered by mains electricity or other sources of power are used to deliver streams of compressed gas for a variety of uses e.g. in building air conditioning systems, in spray painting, in small factories and vehicle repair installations, in compressed air systems for hospitals and laboratories and in the catering industry. The majority of compressors are oil-lubricated, the oil serving to lubricate the moving parts, removing heat and catching fine particles in the air being compressed. The major components of a typical compressor are illustrated in Fig. 1. Air from an intake 10 passes through intake filter I and thence via line 12 to a rotary vane or screw compressor unit 2 driven by electric motor 3. A mixture of compressed air, water and oil is expelled from the compression unit and travels via line 14 to an oil separation unit 16 shown diagrammatically in Fig. 2. Typically the stream of compressed air entering the unit 16 impinges onto a baffle 18 and the larger droplets coalesce and fall into a sump region 20. The air stream contains droplets of oil of size 0.3-1.5 µm, which are separated by means of a coalescing filter 4 of wrapped or molded glass micro-fibers so as to reduce contamination and recover the oil. Coalesced oil returns from the interior of the cartridge via a scavenging line 22 and line 12 to the compressor unit. The arrangement shown is for a vertical filter with flow in an out-to-in direction, but an in-to-out flow direction is commonplace, as also is a horizontal filter arrangement. Filtered air from the unit 16 passes via line 26 to the air side 28 of an after-cooler 5 and thence via output line 30 to a tank or distribution network or the like. Oil from the sump region 20 passes through filter 6 and the oil side 32 of the after-cooler 5. It then passes via line 34 into the compressor unit 2.

Fig. 3 shows the pressure drop in milli-bars (Mb) against time for a typical coalescing filter 4. The pressure drop rises steeply during an initial period whilst the filter is wetting out with oil. It then rises only gradually until the bores become clogged with contaminant, at which time a region A is reached where the pressure drop rises sharply, operation of the compressor becomes inefficient and the expected output may not be achieved, for example after 12 months operation of the compressor. In the case of a poor intake filter 1, poor or deteriorated oil, or vapor moving through the intake, the time B at which a rapidly increasing pressure drop is experienced may be reduced, e.g. to about 6 months.

A compressor is a device of relatively high value, is protected by the intake filter 1 and the oil filter 6 and has a coalescing filter which is intended to ensure that the air leaving the compressor conforms to defined quality levels. Users of the compressor may replace the filters supplied by the original equipment manufacturer with matching parts made by third parties whose quality is not under the control of the original equipment manufacturer and whose performance may be significantly poorer than that of the genuine spare part. There is therefore a risk that the replacement filter may fail before the manufacturer's recommended service interval for the filter has elapsed. There is also a risk that the user may not adhere to recommended service intervals. In consequence the compressor may become subject to excessive wear and may fail prematurely, or the quality of the output air may become deteriorated which may cause damage to downstream equipment. The original equipment manufacturer may be faced with a repair or warranty claim that is not justified, and may suffer undeserved damage to his reputation for supplying high quality equipment.

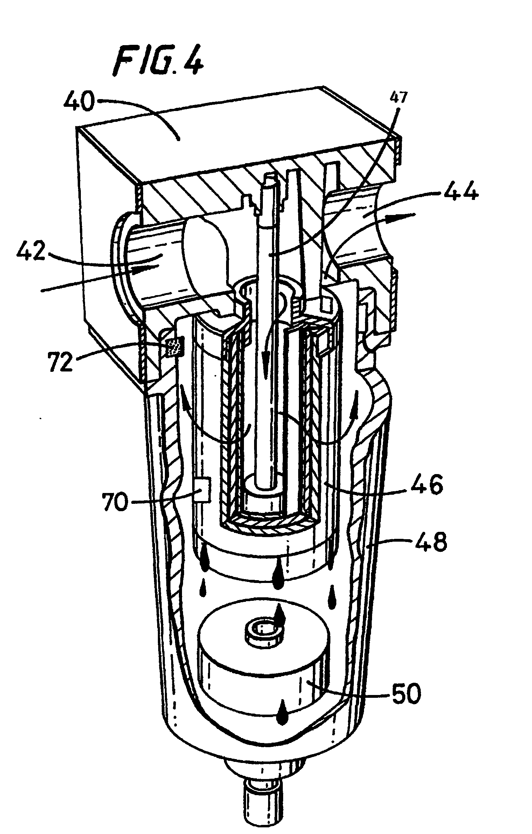

The air from the compressor, even after passage through the coalescing filter may still contain undesirably high amounts of oil that may be in the form of very fine droplets or may be in the form of vapor. The extent of purification required will depend on the use to which the compressed air is to be put, which can be e.g. to blow dirt away from workpieces etc., for pneumatic controls and instrumentation and air tools, building air conditioning, paint spraying and pharmaceutical and electronic applications, To remove trace contaminants, it is common to provide one or more in-line filters. Fig. 4 shows an in-line coalescing filter having a filter head 40 provided with an air inlet 42 and an air outlet 44. A replaceable filter cartridge 46 is supported from the head 40 e.g. by means of a tie rod 47 and can be arranged for flow in an in-to-out direction as shown or in the reverse direction. Oil collects in a lower region of a filter bowl 48 and may be removed at intervals by means of a drain valve 50. Increasingly so-called "spun-on" filters are being used in which the filter and housing are supplied as a single disposable unit, which becomes threadedly attached to the filter head. For removal of vapor, an adsorbent cartridge filled with activated carbon replaces the coalescing filter 46. Oil coalescing filters and oil vapor removal cartridges are described, for example, in GB-A-1236396, 1557821, and 1609519, US-A-3841484 and EP-B-0081297. Again the user may not service the in-line filter with manufacturer's original parts and may not adhere to specified service intervals.

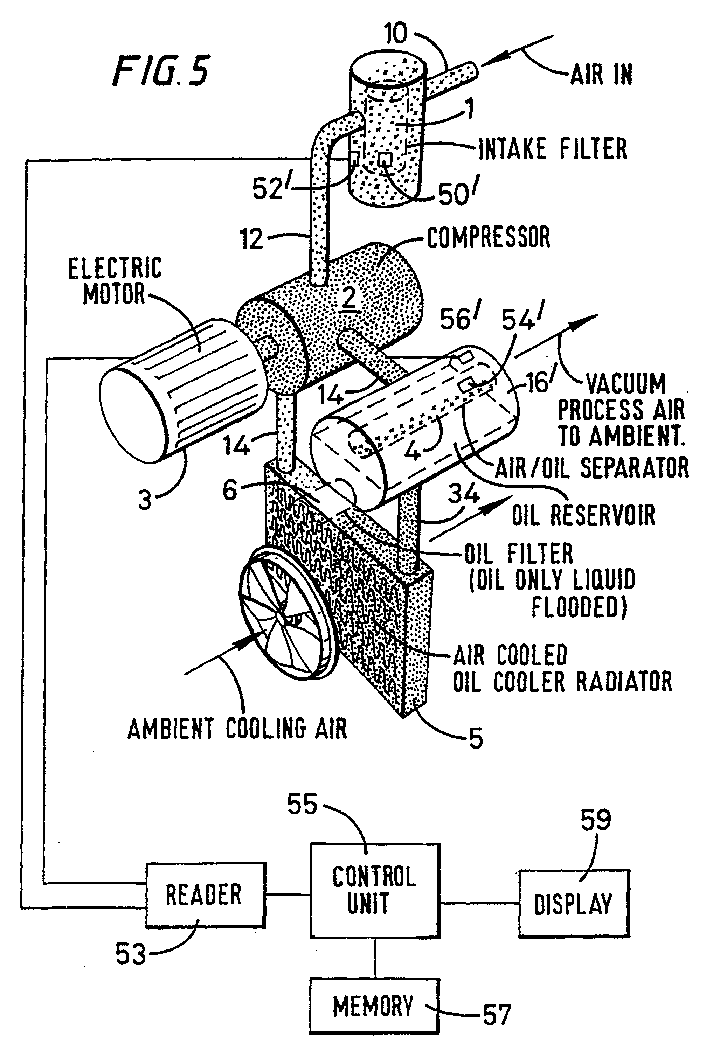

An oil-lubricated rotary vane vacuum pump is diagrammatically shown in Fig 5. Again air from the space being evacuated enters the pump unit 2 via an intake filter 1. Oil circulates between the pump unit 2, a cooler radiator 5 and through filter 6 into reservoir chamber 16". Air passes from the chamber 16" and coalescing filter 4 to exhaust. Again, deficient intake and oil filters 1,6, or undue delay in their replacement can lead to premature wear or failure of the pump, and a deficient coalescing filter 4 can lead to contamination of the surroundings with oil.

The present invention aims to solve the above problem by providing replaceable filter elements in which there is concealed tamper-proof machine-readable identification. Such identification may be a single bit identification (i.e. the presence or absence of a record in memory or a device that will give a predetermined response to an interrogating signal) or it may be a multi-bit identification. A multi-bit identification may be used to provide a code, which may provide a family indication (e.g. manufacturer and model number) and a serial number, together with, if capacity permits, additional information such as date and place of manufacture and the like codes may be provided in a variety of forms. The stored information may be used to enable a check to be carried out that an approved filter is fitted. A change in serial number of the filter may be used to monitor compliance with approved times for filter exchange. In the case of a manufacturing defect, a stored serial number can also be used to trace the manufacturing details of the filter in question from the records held by the manufacturer and assist in tracing the cause of the defect.

Examples of non-contact identification technologies that may be applied to a filter to identify it with varying degrees of detail from mere type authentication to records of serial number etc. are set out below:
(a) A concealed strip of soft magnetic material in or on the filter which can be interrogated by a signal from a reader connected to an antenna in the filter head and having a frequency at which the strip is resonant. The resonance condition generates hysteresis or harmonics that are detectable to indicate that a filter is present and has the correct tag.
(b) A resonant circuit tag comprising an insulating substrate carrying a closed loop of a conductive element and a capacitive element which may conveniently be provided by two separate areas of thin metal on either side of the substrate. The tag may be attached to or built into the filter at a suitable location and may be interrogated by a RF signal at or near the resonant frequency of the circuit. An interrogating coil or antenna may be built into the filter head.
(c) A magnetostrictive tag attached to the filter. Such a tag can incorporate one or more strips of magnetostrictive material and a strip of magnetic material of high coercivity, the magnetostrictive material resonating mechanically in the presence of an aalternating magnetic field of the appropriate frequency. The interrogating magnetic field may be from a coil in the filter head that can be connected to a source of an appropriate AC frequency. A reader sensitive to a magnetic field of the appropriate frequency and also built into the filter head can detect resonance.
(d) A magnetically coupled transponder that operates at e.g. about 125KHz is built into the filter. It may typically comprise a single integrated circuit attached to an antenna and have a read only memory, a power rectifying circuit, an oscillator and a driving circuit. Since the memory is permanent, power is not required to maintain the identity of the tag, which may be purely passive. Transponders of this type are available e.g. from Biomark of Boise, ID, USA and from Trovan.
(e) An electric field coupled transponder which may be a passive device operating at about 2.5 GHz and which may use backscatter modulation. The transponder may if desired adopt the Bluetooth specification for wireless connectivity and may form part of a piconet.

The filter may also be marked by a marker that requites an electrical contact for recovery of the stored information. For example, a ROM chip, e.g. a so-called "silicon serial number" DS 2401 is available from Dallas Semiconductor. Such a chip is less than 5 mm square and only 1.5 mm deep and can readily be fitted to or encapsulated within a filter. It requires connection to ground (which may be to an end cap or side wall of the filter) and has a single pin for control, address, data and power, so that only a single lead going to a single contact area on the filter is required.

Thus in Fig 1, the intake filter 1 carries a transponder 51 that can be interrogated by a first antenna 52 connected to a reader 53 controlled by a control unit 55 which may be a device controlled by a microprocessor or microcontroller, The coalescing filter also carries a transponder 54 that can be interrogated by a second antenna 56 in the unit 16 and also connected to the reader 53. The control unit also receives signals from devices that check the correct operation of the compressor, e.g. from an oil level sensor 58, an oil temperature sensor 60 and an exit air temperature sensor 62. On change of a filter, or on re-start of the compressor after an interruption, the control unit 55 causes the reader 53 to supply interrogating signals to the antennae 52,56. Returned data is checked to ascertain whether correct cartridges are in place. Assuming that both part identities and serial numbers are recorded in the memories of the transponders 51,54 stored instructions in the control unit 55 cause this information to be recorded in memory 57. If one or other filter does not provide a correct response or any response, then the control unit causes an indication of this fact to be stored in memory, It may also cause a warning to appear at display 59 and/or it may cause inhibit further operation of the compressor. The control unit 55 may be part of a service/diagnostic system for the compressor or vacuum pump, and if the presence of correct filters is not detected, it may simply log in memory 57 the fact that no correct identity signal has been recorded, this fact appearing with other performance data for the machine. A similar arrangement is shown for the vacuum pump of Fig. 5. An in-line filter can also have a transponder 70 fed with interrogating signals e.g. by means of an antenna 72.

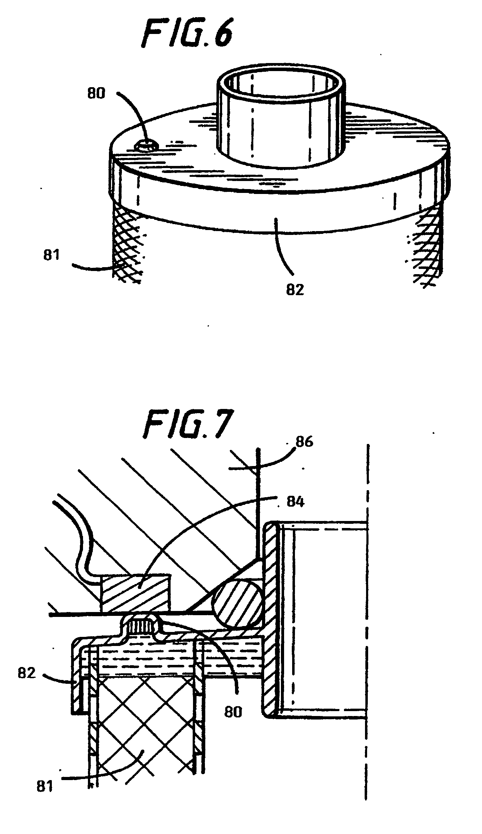

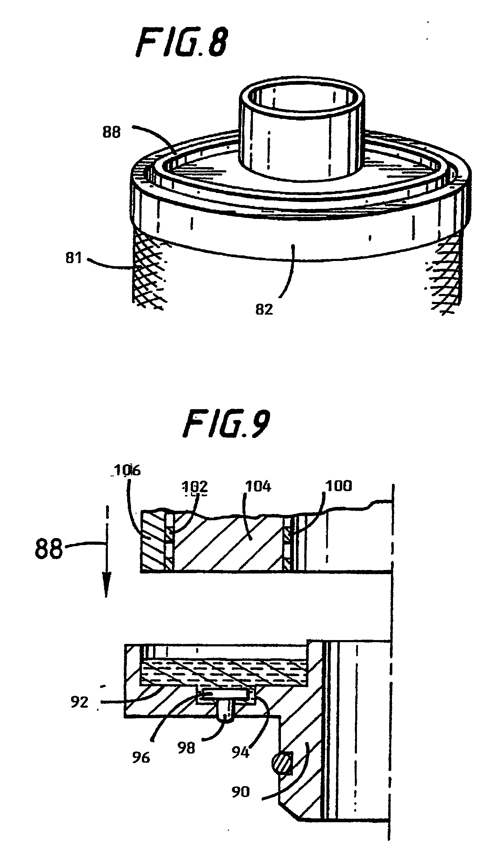

In the case of oil coalescing filters, the filter medium usually takes the form of a tube 61 of pleated, wrapped or molded glass microfibre which is closed by metal or plastics end caps at each end. The identification device may be concealed within one or other of the end caps, and preferably within the end cap intended to fit within a filter head attached in-line or to a compressor, vacuum pump or other active device. Thus one of the end caps may have a memory chip on or buried within it, the chip having an identity code recorded in memory and a connection to a metal component of the filter (which will normally be connected to earth) and a data lead. As shown in Figs 6 and 7 such a data lead may go to a contact nib 80 projecting from end cap 82 which when the filter is correctly positioned mates with a contact 84 in an adjoining portion 86 of the filter head. In Fig 8 a contact ring 88 replaces the nib 80 so that a connection is made with the terminal 84 of the filter head irrespective of the angular position of the filter. Interrogation signals can then be transmitted directly from the filter head to a silicon serial number or other memory device fitted on or in the filter, and stored identity information can be recovered therefrom. A control unit can therefore check whether an approved filter is being used and by checking its internal clock whether correct filter exchange times are being obeyed.

Means may be provided to measure the pressure drop across the coalescing and/or intake filters and may be arranged to generate a signal when the pressure drop has reached a predetermined value signifying that the filter element has reached the end of its useful life. If the time required is less than the manufacturer's service interval, the internal records of the compressor, vacuum pump or other active device may show that this is because an authentic replacement filter was not fitted.

The invention is applicable to other forms of fluid filter e.g. oil filters for internal combustion engines. In particular it can be used for air intake filters for internal combustion engines and compressed air systems used throughout the transport industry including aircraft, trains, ships, automobiles and goods vehicles. It is applicable to compressors used to provide a supply of compressed air for a ring-main system for a factory, hospital or other place where compressed air is used as a source of energy. It is also useful for underground interception filters for installations made by Conder and other manufacturers to condition outflow water from interceptor tanks of industrial installations (e.g. petroleum retail forecourts) or waste water prior to discharge into a coarse sewer or water-way.

In Fig 9 there is shown part of a filter having a plastics end cap 90 formed with an annular flanged and upturned region defining a resin well 92 which is formed with a recess 94 for receiving a memory chip.96 which could be a Dallas Silicon Serial Number or the like. One side of the chip is grounded by connection (not shown) to metallic parts of the filter cartridge and its data pin is connected to a terminal 98 that appears through the exposed face of the end cap. The filter has inner and outer sleeves 100, 102 of expanded metal between which is sandwiched a mounded glass fibre coalescing filter 104. On the outer face of the sleeve 102 there is provided a drainage layer 106 of non-woven material. The above components are pushed into a layer of polyurethane adhesive in the well 92, and the adhesive is allowed to cure to complete the end of the filter, the chip 9 being held in a well-protected location. It will be appreciated that the above position is only one possibility and other locations for a chip or a transponder are possible e.g. between the coalescing filter 104 and the drainage layer 106.

## Claims

1. A compressor or vacuum pump (2) having;
an air intake filter (1) and/or a coalescing filter (4) for conditioning the flow of gas to maintain the correct functioning of the compressor or pump and which requires to be replaced periodically;
means applied (51/54) to said filter for providing concealed tamper-proof machine-readable identification for said filter;
a filter head or housing forming part of said compressor or vacuum pump and having means (52/56) for detecting said identification;
means for measuring the pressure drop across the air intake filter and or the coalescing filter and for generating a signal when the pressure drop has reached a predetermined value signifying that the filter has reached the end of its useful life; and
control means (55) operable to interrogate a new cartridge whenever the filter is changed to recover the identification, store in memory (5) whether an automatic replacement filter has been fitted and provide an indication whether a useful life less than the manufacturer's service interval is associated with non-use of an authentic replacement filter.

2. The compressor or vacuum pump of claim 1, wherein the identification comprises a part identity for said filter.

3. The compressor or vacuum pump of claim 1, wherein the identification includes a serial number traceable to the manufacturing details of said filter.

## Patentansprüche

1. Ein Kompressor oder eine Vakuumpumpe (2) bestehend aus
einem Lufteinlaßfilter (1) und/oder einem Tröpfchenfilter (4) für eine Aufbereitung eines Gasflusses um eine korrekte Funktion des Kompressors oder der Vakuumpumpe aufrechtzuerhalten, wobei eine Erneuerung periodisch notwendig ist,
weiters auf diesen Filter angebrachte Mittel (51/54) für eine verdeckte, manipulationssichere, maschinenlesbare Identifikation
weiters einem Filterkopf oder einem Filtergehäuse als Teil dieses Kompressors oder dieser Vakuumpumpe mit einer Vorrichtung (52/56), welche die Identifikation erkennt,
weiters einer Vorrichtung zur Messung eines Druckabfalls entlang des Lufteinlaßfilters oder dem Tröpfchenfilters zur Erzeugung eines Signals, sobald der Wert des Druckabfalls einen vorgegebenen Wert erreicht und somit anzeigt, daß das Ende der Brauchbarkeitsdauer des Filters erreicht wurde,
und einer Kontrollvorrichtung (55) mit der Funktion, wann immer ein Filtereinsatz gewechselt wird einen neuen Fitereinsatz abzufragen, die Identifikation wiederherzustellen, und im Speicher (57) zu speichern, ob ein automatischer Ersatzfilter eingebaut wurde und einen Hinweis bereitzustellen, ob die Brauchbarkeitsdauer, die kürzer als das Serviceintervall des Herstellers ist, mit einer Verwendung von nicht authentischen Ersatzfiltern in Verbindung gebracht werden kann.

2. Ein Kompressor oder eine Vakuumpumpe nach Anspruch 1, wobei die Identifikation eine Teile-ldentnummer des Filters beinhaltet

3. Kompressor oder eine Vakuumpumpe nach Anspruch 1, wobei die Identifikation eine Seriennummer für eine Rückverfolgung der Herstellungsdetails des Filters beinhaltet.

## Revendications

1. Compresseur ou pompe à vide (2) comportant :
un filtre d'entrée d'air (1) et/ou un filtre coalescent (4) pour conditionner le flux de gaz afin de maintenir le fonctionnement correct du compresseur ou de la pompe et qui requiert d'être remplacé périodiquement ;
des moyens appliqués (51/54) audit filtre pour fournir une identification encastrée, lisible pour une machine de protection contre les manipulations correspondant audit filtre ;
une tête de filtre ou une enceinte faisant partie dudit compresseur ou de ladite pompe à vide et comportant des moyens (52/56) pour détecter ladite identification ;
des moyens pour mesurer la chute de pression à travers le filtre d'entrée d'air et ou le filtre coalescent et pour générer un signal lorsque la chute de pression atteint une valeur prédéterminée signifiant que le filtre a atteint la fin de sa durée de vie utile ; et
des moyens contrôle (55) pouvant agir pour interroger une nouvelle cartouche chaque fois que le filtre est changé pour récupérer l'identification, la stocker en mémoire (5) si un filtre à remplacement automatique a été adapté et fournir une indication si une durée de vie utile inférieure à la durée de service du fabricant est associée à la non utilisation d'un filtre de remplacement authentique.

2. Compresseur ou pompe à vide selon la revendication 1, dans lequel (laquelle) l'identification comporte une identité partielle correspondant audit filtre.

3. Compresseur ou pompe à vide selon la revendication 1, dans lequel (laquelle) l'identification inclut un numéro de série imputable aux détails de fabrication dudit filtre.
